Europäisches Patentamt

European Patent Office

Office européen des brevets

(11) Publication number: **0 219 163**
**A2**

## (12) EUROPEAN PATENT APPLICATION

(21) Application number: **86201721.7**

(22) Date of filing: **03.10.86**

(51) Int. Cl.⁴: **C01B 3/46** , **C10J 3/12**

(30) Priority: **09.10.85 GB 8524894**

(43) Date of publication of application:
**22.04.87 Bulletin 87/17**

(84) Designated Contracting States:
**AT BE DE FR GB IT NL**

(71) Applicant: **SHELL INTERNATIONALE
RESEARCH MAATSCHAPPIJ B.V.
Carel van Bylandtlaan 30
NL-2596 HR Den Haag(NL)**

(72) Inventor: **van der Burgt, Maarten Johannes
Carel van Bylandtlaan 30
NL-2596 HR The Hague(NL)**

(74) Representative: **Aalbers, Onno et al
P.O. Box 302
NL-2501 CH The Hague(NL)**

(54) **Process and apparatus for producing a hydrogen-containing gas.**

(57) A process for producing a hydrogen-containing gas comprising the following steps:

(i) cracking hydrocarbonaceous material substantially in the absence of steam into carbon and hydrogen-containing gas by contacting said material with a heated mass of non-fluidized solids and allowing carbon to deposit on the solids; and

(ii) steam gasification of carbon formed in step (i).

The invention further relates to an apparatus for carrying out said process.

FIG.2

EP 0 219 163 A2

## PROCESS AND APPARATUS FOR PRODUCING A HYDROGEN-CONTAINING GAS

The invention relates to a process for producing a hydrogen-containing gas, to hydrogen-containing gas thus obtained and to an apparatus for carrying out said process.

Many processes are known for the conversion of hydrocarbonaceous material into hydrogen-containing gaseous products such as synthesis gas - (which comprises in addition to hydrogen a substantial amount of carbon monoxide and usually small amounts of carbon dioxide, steam and/or unconverted hydrocarbons). Accordingly, substantially pure hydrogen gas will only be obtained after subjecting product gases to, sometimes extensive, further treatments such as CO-shifting, absorption, refrigeration, membrane separation and/or contacting with molecular sieves.

It is further known that the above-mentioned gas treatments can be avoided by applying a process in which hydrocarbons are converted thermally or catalytically into carbon and substantially pure hydrogen in a first reaction zone comprising a fluidized bed of hot solid particles and wherein the particles with carbon deposited thereon are transported to a second reaction zone in which a fluidized bed is maintained wherein said carbon is converted with steam into synthesis gas; the particles from the first and/or the second reaction zone are subsequently transported to a heating zone where the particles are contacted in a fluidized state with the combustion products of fuel gas and/or at least part of the hydrogen or the carbon monoxide obtained in said process and combusted with an oxygen-containing gas.

However, the use of fluidized beds usually leads to entrainment of solid particles from these beds by product gases leaving the fluidized beds; consequently each fluidized bed has to be accompanied by solids/gas separation means (e.g. cyclones). Moreover, the repeated transportation of substantial amounts of hot solid particles from one reaction zone to another and the continuous fluidization of said particles in the reaction zones will lead to the formation of fine particulate material which has a negative influence on the solids/gas separation efficiency and may furthermore pose environmental problems.

It has now been found that hydrogen-containing gas can be produced, without either gas separation treatment(s) or solids/gas separation being required, by carrying out a process in which a heated mass of non-fluidized solids is used to provide heat required for carrying out separate endothermic cracking-and steam gasification steps.

The invention therefore relates to a process for producing a hydrogen-containing gas which comprises the following steps:

(i) cracking hydrocarbonaceous material substantially in the absence of steam into carbon and hydrogen-containing gas by contacting said material with a heated mass of non-fluidized solids and allowing carbon to deposit on the solids; and

(ii) steam gasification of carbon formed in step (i).

Hydrogen-containing gas is defined for the present purpose as substantially pure hydrogen or synthesis gas wherein the hydrogen/carbon monoxide molar ratio may vary.

The process according to the invention is suitably carried out in one or more fixed -or moving - beds comprising a heated mass of solids. Preferably fixed beds are applied which may contain heat-resistant solid material in any desired shape and size, such as a fixed brick matrix or a packed bed of particulate solids. Particulate solids such as spheres or cylinders passing openings with a width of 1-100 mm, and in particular 2-50 mm, are suitably used in the present process.

Various solid materials may be used in the process according to the present invention provided that the material is sufficiently heat resistant and can withstand large temperature variations which occur during start-up and shut-down of the process. Suitable solids comprise refractory oxides, silicium carbide, carbonaceous materials (e.g. petrol cokes) and mixtures thereof. Metal alloys or metal compounds may also be suitably used; these materials have the advantage of possessing a relatively high thermal conductivity and volumetric heat capacity compared with the previously mentioned materials. In some cases it may be advantageous to use solids which, as such or in the form of additional compounds, possess catalytic activity for at least one of the process steps. However, in most cases substantially non-catalytic solids will be most suited for use in the process according to the invention because the deposition of carbon on the surface of the solids will usually lead to a substantial decrease in catalytic activity, if present in fresh solids.

The process according to the invention may be carried out in a discontinuous manner in one reaction zone containing non-fluidized solids or, preferably, may be carried out semi-continuously in a sequential mode of operation simultaneously in at least two different reaction zones comprising masses of non-fluidized solids. Fully continuous operation is feasible by employing e.g. pebble bed reactors or rotatable (suitably cylindrical) reactors comprising a plurality of reaction zones which are sequentially employed as first-, second-and, optionally, third reaction zone.

When the process according to the invention is carried out (semi-)continuously, hydrocarbonaceous material will be cracked in a first zone substantially in the absence of steam, whereas steam gasification will be carried out at the same time in a second zone. Although small amounts of steam - (e.g. 1-5 %v) may be present in the first zone, it is preferred to carry out the cracking step without steam in order to obtain substantially pure hydrogen. After heating (at least part of) the solids from which carbon has been removed by the endothermic reaction with steam, the second zone can be used for cracking hydrocarbonaceous material by contacting said material with the heated solids, whereas the first zone will then simultaneously be used for steam gasification of carbon which has been previously deposited on the solids present in said zone.

In a preferred embodiment of the process according to the invention the feed for a particular reaction zone (either hydrocarbonaceous material or a steam-containing gas) will be heated in the upsteam part of the bed before entering the reaction zone and product gas will be cooled in the downstream part of the bed in order to conserve energy.

The direction of gas flow through a reaction zone is suitably reversed after one or both of steps (i) and (ii) have been carried out in said zone. In particular when the extreme parts of the bed(s) are used as heat recuperators, it is advantageous to apply gas flow reversal because the downstream part of the bed which has been heated by hot product gas subsequently becomes the upstream part of the bed and releases heat to the relatively cold feed gas.

Both step (i) (cracking) and step (ii) (steam gasification) are suitably carried out at a substantially equal pressure from 0,5-50 bar abs. and preferably from 5-20 bar abs. The temperature in the cracking zone will in most cases be higher than the temperature in the steam gasification zone which can be suitably attained by heating the solids to a temperature from 700-1800 °C, and preferably from 1000-1500 °C before contacting the solids with hydrocarbonaceous material in the cracking zone. Provided that a sufficient amount of solids is heated, it will be possible to use the solids (which have released some heat in step (i) again in step - (ii); the temperature of the solids applied in step - (ii) should preferably be maintained within a range of 600-1300 °C.

Heating of the solids applied in the process according to the invention may be carried out in various ways. Suitably at least part of the solids is heated by combustion under pressure of a fuel gas wtih an oxygen-containing gas (preferably air) and contacting the combustion gas with the solids, whereafter the combustion gas may be expanded to provide power for compressing said oxygen-containing gas and/or a gas produced in step (i) and/or step (ii).

In a preferred embodiment of the process according to the invention fuel gas is combusted with less than the stoichiometric amount of oxygen in the presence of at least part of the solids applied in step (i) and/or step (ii) resulting in carbon deposition on said solids and leading to the production of additional amounts of synthesis gas in step (ii), provided that a sufficient amount of steam is used in step (ii). Combustion gas which has been contacted with solids is suitably further applied in step (ii) as feed gas, thus making good use of the components of said gas (e.g. steam and carbon dioxide).

When the production of synthesis gas is the main objective, at least part of the hydrogen produced in step (i) is suitably used as (part of the) fuel gas to heat solids in the above-described manner. Alternatively, when the production of hydrogen is the main objective, carbon monoxide may be separated from the remainder of the synthesis gas produced in step (ii) and used as (part of the) fuel gas to heat solids.

Various solid, liquid or gaseous hydrocarbonaceous materials can be used as feed for step - (i) of the process according to the invention, such as light and heavy hydrocarbons. These hydrocarbons may be obtained from e.g. crude oil, oil shale, tar sands and/or biomass. Preferably, liquid or gaseous hydrocarbons are used, in particular natural gas or methane. In some cases natural gas is preferably subjected to a treatment to remove sulphur and/or inorganic substances before using it as feed for the present process.

The invention also relates to hydrogen-containing gas obtained by a process as described hereinbefore.

The invention further relates to an apparatus in which the above-described process may be carried out and which comprises at least two separate reactor sections between which heat can be exchanged, each section comprising supporting means for a mass of heat resistant solid material, inlet-and outlet means.

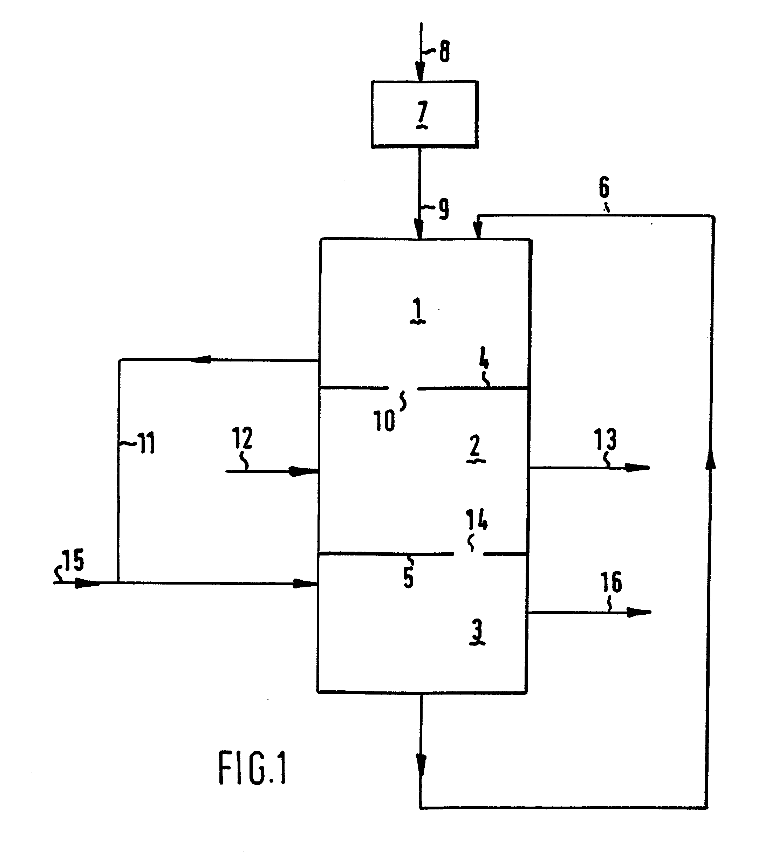

Suitably such an apparatus, as schematically depicted in Figure 1, comprises an upper (1)-, a middle (2)-and a lower (3)-reactor section which are separated by supporting means (4, 5) which allow solid particles to be transferred from the upper-, via the middle-, to the lower section. The apparatus further comprises means (6) (e.g. pneumatic means or a conveyor belt) for transporting solid particles from the lower-to the upper section. Fuel and oxygen-con taining gas is introduced into a combustion zone (7) through line (8) and combustion gas is led via line (9) to upper reactor section - (1) to heat solid particles therein. The combustion zone may also be integrated with section (1), if desired. Heated solid particles are gravity-fed through one or more openings (10) in supporting means (4) to the middle reactor section (2) and combustion gas is optionally led via line (11) to the lower reactor section (3). Hydrocarbonaceous material is introduced into section (2) through line - (12) and the produced hydrogen-containing gas is removed through line (13). Solids with carbon deposited thereon subsequently move through one or more openings (14) in supporting means (5) to the lower section (3) wherein a steam-containing gas is introduced through line (15). Synthesis gas is removed from section (3) through line (16).

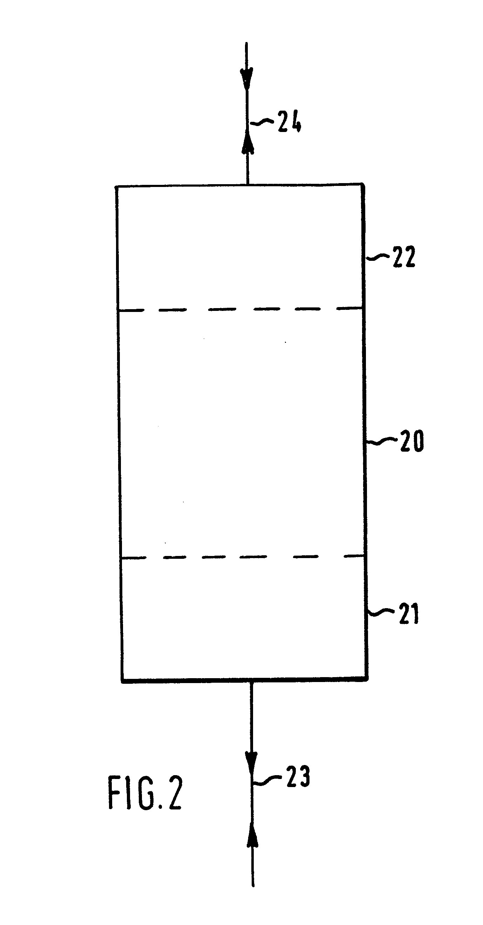

The process according to the invention may also be carried out as schematically depicted in Figure 2. In this embodiment the process is carried out using a three-step sequence (designated o, i and ii) in one or more reactors comprising a reaction section (20) and two heat exchange sections - (21, 22).

During step (o) combustion gas is led through line (23) in order to heat a mass of non-fluidized solids present in reaction section (20) and furthermore to heat recuperator sections (21, 22); the combustion gas is subsequently removed via line - (24).

Subsequently, the gas flow is reversed in step (i) of the sequence and methane-comprising gas is led through line (24), heated in section (22) and cracked in section (20); substantially pure hydrogen is then removed through line (23).

In the next step (ii) a steam-containing gas is introduced through line (24) in section (22) where the gas is heated by contact with the recuperator and then reacts with carbon deposited on the solids present in section (20). Synthesis gas thus produced is removed through line (23) after heat exchange in section (21). After carrying out step - (ii) the flow is again reversed and step (o) can be repeated.

A considerable advantage of the use of the afore-mentioned heat recuperator sections is that valves (required for changing feed streams to the reactor; not depicted in Figure 2) can be operated at moderate temperatures which lie far below the temperatures prevailing in reactor sections (20).

## Claims

1. A process for producing a hydrogen-containing gas which comprises the following steps:

(i) cracking hydrocarbonaceous material substantially in the absence of steam into carbon and hydrogen-containing gas by contacting said material with a heated mass of non-fluidized solids and allowing carbon to deposit on the solids; and

(ii) steam gasification of carbon formed in step (i).

2. A process according to claim 1 wherein steps (i) and (ii) are carried out in a fixed or moving bed comprising said solids.

3. A process according to claim 1 or 2 wherein steps (i) and (ii) are carried out in a sequential mode of operation simultaneously in at least two different reaction zones comprising masses of non-fluidized solids.

4. A process according to claim 3 wherein the direction of gas flowing through a reaction zone is reversed after one or both of steps (i) and (ii) have been carried out in said zone.

5. A process according to any of the preceeding claims wherein steps (i) and (ii) are carried out at a substantially equal pressure from 0,5-50 bar abs., and preferably from 5-20 bar abs.

6. A process according to any of the preceeding claims wherein at least part of the solids is heated by combusting a fuel gas with an oxygen-containing gas and contacting the combustion gas with said solids.

7. A process according to claim 6 wherein combustion gas which has been contacted with solids is expanded to provide power for compression of said oxygen-containing gas and/or a gas produced in step (i) and/or step (ii).

8. A process according to claim 6 or 7 wherein combustion gas which has been contacted with solids is applied in step (ii) as feed gas.

9. A process according to any of the preceeding claims wherein solids are heated to a temperature from 700-1800 °C, preferably from 1000-1500 °C, before being contacted with hydrocarbonaceous material in step (i).

10. A process according to any of the preceeding claims wherein solids comprising a refractory oxide, silicium carbide and/or carbonaceous material are applied in steps (i) and (ii).

11. A process according to any of the preceeding claims wherein a methane-comprising gas is applied as hydrocarbonaceous material in step (i).

12. A process according to any of the preceeding claims wherein step (ii) is carried out at a temperature from 600-1300 °C.

13. A process substantially as described hereinbefore.

14. Hydrogen-containing gas obtained by a process according to any of the preceding claims.

15. An apparatus suitable for carrying out the process according to any of claims 1-13 which comprises at least two separate reaction sections between which heat can be exchanged, each section comprising supporting means for a mass of heat resistant solid material, inlet-and outlet means.

16. An apparatus according to claim 15 which comprises an upper-, a middle-and a lower-reaction section which are separated by supporting means which allow solid particles to be transferred from the upper-, via the middle-, to the lower section, and means for transporting solid particles from the lower-to the upper section.

17. An apparatus substantially as described hereinbefore with reference to Figure 1.

FIG.1

FIG.2